# EUROPÄISCHE PATENTSCHRIFT

(11) **EP 2 982 493 B1**
(45) Veröffentlichungstag und Bekanntmachung des Hinweises auf die Patenterteilung: **14.11.2018**
(21) Anmeldenummer: 15178855.1
(22) Anmeldetag: 29.07.2015
(51) Int. Cl.: B29C 70/38

(54) **FASERLEGEVORRICHTUNG**
FIBRE LAYER DEVICE
DISPOSITIF D'APPLICATION DE FIBRES

(30) Priorität: 31.07.2014 DE 102014110909
(43) Veröffentlichungstag der Anmeldung: 10.02.2016
(73) Patentinhaber: Deutsches Zentrum für Luft- und Raumfahrt e.V., 51147 Köln (DE)
(72) Erfinder: Nguyen, Duy Chinh, 21682 Stade (DE)
(74) Vertreter: Aisch, Sebastian

(56) Entgegenhaltungen:
- EP-A1- 1 719 610
- JP-A- H0 462 142
- US-A- 4 872 619

## Beschreibung

Die Erfindung betrifft eine Faserlegevorrichtung zum Legen von Faserendlosmaterial zur Herstellung eines Faserverbundbauteils.

Bauteile aus einem Faserverbundwerkstoff, sogenannte Faserverbundbauteile, sind aus der Luft- und Raumfahrt heute nicht mehr wegzudenken. Aber auch im Automobilbereich findet die Verwendung derartiger Werkstoffe immer mehr Zuspruch. Insbesondere kritische Strukturelemente werden aufgrund der hohen gewichtsspezifischen Festigkeit und Steifigkeit bei minimalem Gewicht aus faserverstärkten Kunststoffen gefertigt. Durch die aus der Faserorientierung resultierenden anisotropen Eigenschaften der Faserbundwerkstoffe können Bauteile an lokale Belastungen angepasst werden und ermöglichen so eine optimale Materialausnutzung im Sinne des Leichtbaus.

Ein Nachteil von Faserverbundwerkstoffen sind die gegenüber anderen, konventionellen Werkstoffen höheren Fertigungskosten, die sich meist dadurch ergeben, dass viele Herstellungs- bzw. Fertigungsschritte händisch durchgeführt werden müssen. Bei Großbauteilen aus Faserverbundwerkstoffen ist daher eine zunehmende Automatisierung einzelner Fertigungsschritte zu beobachten, wie beispielsweise das automatisierte Legen der Fasern auf einem Werkzeug mittels Roboter. Dabei werden die Fasern bzw. Faserhalbzeuge durch einen Faserablegekopf auf dem Werkzeug abgelegt, der als Endeffektor an einem Roboterarm angeordnet ist. Während des Legens der Fasern auf dem Werkzeug wird dabei der Ablegekopf mit Hilfe des Roboters entsprechend von einem vorgegebenen Bewegungsmuster verfahren, so dass die Fasern auf dem Werkzeug entsprechend abgelegt werden können.

Als Fasern bzw. Fasermaterial kommen insbesondere Faserendlosmaterialien mit einem flachen Profilquerschnitt, wie beispielsweise Towpreg, Slittape, Faserstränge, Rovings sowie Gelege- und Gewebestränge zum Einsatz. Das Fasermaterial muss dabei von einem feststehenden Fasermagazin bzw. Fasermaterial-Vorratsspeicher zu dem im Raum frei bewegbaren Ablegekopf (Faserlegeeinheit) befördert bzw. transportiert werden. Aufgrund der freien Bewegbarkeit des Ablegekopfes im Raum verändert sich während des Ablegens der Fasern dabei allerdings ständig die Distanz und Richtung zwischen dem feststehenden Fasermaterial-Vorratsspeicher und dem Ablegekopf, so dass ungewollte Zugkräfte auf das Fasermaterial wirken bzw. Fasermaterialüberschuss entstehen kann.

Neben der klassischen Verwendung von Portalanlagen, kommen in dem Faserlegeprozess vermehrt mehrachsige Bewegungsautomaten, wie beispielsweise Gelenk- bzw. Knickarmroboter zum Einsatz, die eine höhere Flexibilität im Fertigungsprozess erlauben. Dabei sind die einzelnen Glieder eines derartigen Bewegungsautomaten über Linearführungen und/oder Drehgelenke zu einer kinematischen Kette miteinander verbunden, wobei insbesondere bei Industrierobotern zwischen einer oder mehreren Hauptachsen und den in der Nähe des Endeffektors vorgesehenen Kopfachsen (auch Nebenachsen genannt) unterschieden wird. Die Hauptachsen eines Industrieroboters ermöglichen dabei die freie Positionierung eines Endeffektors im Raum, während die Kopfachsen in erster Linie für die Orientierung des Werkzeugs zuständig sind und meist aus einer Reihe von Drehgelenken bestehen. Häufig sind mindestens zwei der drei Hauptachsen parallel in der kinematischen Kette vorgesehen und bilden so ein wattsches Parallelogramm, so dass durch die Drehbewegung der beiden parallelen Hauptachsen eine Linearbewegung erzeugt werden kann.

Aufgrund der Bewegungsvielfalt, mit der die Endeffektoren in nahezu allen sechs Freiheitsgraden bewegt werden können, ergeben sich Probleme hinsichtlich der Zuführung der Endlosfasermaterialien von dem feststehenden Fasermaterialvorratsspeicher zum dem frei bewegbaren Ablegekopf. Dabei sollten starke Zugbelastungen auf dem Fasermaterial sowie Materialüberschuss in der Zuführungskette vermieden werden, um eine prozesssichere Zuführung der Fasermaterialien an dem Faserlegekopf zu gewährleisten.

So ist aus der EP 2 117 818 B1 eine Faserlegeeinheit mit einem Faserspeicher, einem Roboter und einem Ablegekopf bekannt, bei dem das Fasermaterial mit Hilfe eines flexiblen Rohrleitungssystems dem Ablegekopf zugeführt wird. Die Fasermaterialien, die in dem Fasermagazin als Faserendlosmaterial bzw. Quasiendlosmaterial vorliegen, werden innerhalb des flexiblen Rohrleitungssystems transportiert, wobei der Innenraum des Rohrleitungssystems mit einem Gas beaufschlagbar ist. Allerdings ergibt sich durch das geschlossene Röhrensystem der Nachteil, dass die Fasern bzw. Fasermaterialien an den Rohrinnenwänden während des Zuführens anliegen können und somit Reibung verursachen, was zu Beschädigungen der Fasern führen kann. Insbesondere bei starken Bewegungen und großen Abstandsänderungen zwischen Faserspeicher und Ablegekopf ist dies aufgrund der starken Biegung und Torsion des Röhrensystems zu befürchten.

Eine ähnliche Vorrichtung ist auch aus der US 2008/0202691 A1 bekannt.

In der nachveröffentlichten DE 10 2013 107 039.6 wird zum Zuführen eines Quasiendlosmaterials von einem Materialspeicher zu einem Verarbeitungsort eine Einrichtung erwähnt, die in Form einer Gliederkette ausgebildet ist, wobei das Quasiendlosmaterial darin über Rollen, die sich in den einzelnen Gliedern der Gliederkette befinden, geführt wird. Hierbei besteht jedoch der Nachteil, dass die Gliederkette mit Hilfe eines Tragsystems gehalten werden muss, um die sich ändernden Distanzen zwischen Ablegekopf und Fasermaterial ausgleichen zu können. Darüber hinaus führen starke Ausschläge aus der Nulllage zu starken Torsions- und Kippbewegungen der Gliederkette, die zu Reibungsbelastungen der Fasern an den Rollen führen können. Auch hier sind Beschädigungen der Fasern zu befürchten, welche die Prozesssicherheit des automatisierten Ablegeprozesses benachteiligen.

Aus der nachveröffentlichten DE 10 2013 108 570.9 ist des Weiteren eine mehrzeilige Faserführung bekannt, bei der die Fasen mit Hilfe von an dem Roboter angeordneten Übergangspunkten entlang der kinematischen Kette geführt werden, wobei die Übergangspunkte sich in den Drehachsen der jeweiligen Achsen des mehrachsigen Roboters befinden. Hierdurch können beim Bewegen des Roboters sämtliche Zugkräfte und Materialüberschüsse beseitigt werden, so dass einzelne Faserstränge sicher zu dem Ablegekopf geführt werden können. Als nachteilig hat sich jedoch hierbei herausgestellt, dass bei zunehmender Anzahl von gleichzeitig zu transportierenden Faserendlosmaterialien (beispielsweise Faserstränge) nicht jeder einzelne Faserstrang auch tatsächlich in der Drehachse des Drehgelenkes positioniert werden kann, so dass es bei einzelnen Fasersträngen im Parallelbetrieb dennoch zu unerwünschten Zugbeanspruchungen bzw. Materialüberschüssen kommt.

Aus der DE 601 13 505 T2 ist eine Vorrichtung zum automatisierten Herstellen von Vorformen bekannt, wobei ein Fasermaterial hierbei einer Hackpistole zugeführt wird, die das Fasermaterial in kleine Faserstücke zerhackt. Die Hackpistole ist dabei an einem Roboter angeordnet, wobei mit Hilfe eines Gewichtes, das zwischen Roboter und Fasermagazin vorgesehen ist, das zu transportierende Fasermaterial auf Spannung gehalten wird.

Aus der DE 10 2013 107 039 A1 ist eine Faserlegevorrichtung bekannt, bei der das Fasermaterial entlang einer Gliederkette mit feststehenden Transportweg zu einem Faserlegekopf, der an einem Roboter angeordnet ist, transportiert wird.

Aus der DE 32 26 290 A1 ist ein Verfahren und eine Vorrichtung zum gesteuerten Ablegen von Fasern bekannt, wobei auch hier das Fasermaterial zu einem Ablegekopf mittels flexibler Schläuche transportiert wird.

Schließlich ist aus der DE 10 2012 218 178 A1 eine Vorrichtung zur Herstellung von Faservorformlingen bekannt, bei dem das Fasermaterial in einem Tiefziehprozess umgeformt wird. Die bei dem Tiefziehprozess entstehende Längenänderung des Fasermaterials wird mit Hilfe einer Ausgleichseinrichtung kompensiert.

Aus der JP H04 62142 A ist eine Faserlegeanlage mit einem Roboter und einem Faserlegekopf bekannt, wobei innerhalb der kinematischen Kette des Roboters sowohl der Fasermaterialspeicher als auch eine Ausgleichseinheit angeordnet ist.

Aus der EP 1 719 610 A1 ist eine Faserlegevorrichtung gemäß dem Oberbegriff des Anspruchs 1 bekannt, bei der auf einem Schienensystem sowohl ein Spulenmagazin als auch eine Robotervorrichtung angeordnet ist, wobei an der Robotereinheit ein Faserlegekopf angeordnet ist, um so Fasermaterial auf einem Formwerkzeug ablegen zu können.

Es ist daher Aufgabe der vorliegenden Erfindung eine verbesserte Faserlegevorrichtung anzugeben, bei der auf eine Vielzahl von Faserendlosmaterialien, beispielsweise Fasersträngen, gleichzeitig und parallel zu einer an einem Roboter angeordneten Faserlegeeinheit geführt werden können, ohne dass Materialbeschädigungen aufgrund der Bewegung des Roboters und der daraus resultierenden Zugkräfte und/oder Materialüberschüssen kommt.

Die Aufgabe wird erfindungsgemäß mit der Faserlegevorrichtung gemäß Anspruch 1 gelöst.

Demnach wird eine Faserlegevorrichtung zum Legen von Faserendlosmaterial zur Herstellung eines Faserverbundbauteils vorgeschlagen, dass einen mehrachsigen Bewegungsautomaten, beispielsweise einen industriellen Knickarmroboter, hat. Am Ende der kinematischen Kette des mehrachsigen Bewegungsautomaten ist eine Faserlegeeinheit (Faserlegekopf) zum Legen des Faserendlosmaterials angeordnet, wobei die kinematische Kette des Bewegungsautomaten mehrere Gelenke, insbesondere Drehgelenke umfasst, um die Faserlegeeinheit im Raum zu bewegen. Des Weiteren ist ein Fasermaterial-Vorratsspeicher zum Bereitstellen des abzulegenden Faserendlosmaterials vorgesehen, wobei der Fasermaterial-Vorratsspeicher beispielsweise eine Vielzahl von Faserendlosmaterialien aufnehmen kann, die gleichzeitig und parallel zu der Faserlegeeinheit geführt werden sollen. Dies erfolgt mit Hilfe einer an der Faserlegevorrichtung vorgesehenen Faserführungseinrichtung, mit der das Faserendlosmaterial von dem Fasermaterial-Vorratsspeicher zu der von dem Fasermaterial-Vorratsspeicher entfernten und im Raum frei bewegbaren Faserlegeeinheit geführt werden soll.

Erfindungsgemäß wird nun vorgeschlagen, dass die Faserführungseinrichtung mindestens eine Umlenkeinheit hat, die an dem Bewegungsautomaten in Bezug auf ein Gelenk der kinematischen Kette des Bewegungsautomaten in einem feststehenden Abstand angeordnet ist, so dass zwischen dem Fasermaterial-Vorratsspeicher und der Faserlegeeinheit wenigstens zwei Faserführungsabschnitte gebildet werden.

Des Weiteren weist die Faserlegevorrichtung erfindungsgemäß eine in Faserzuführrichtung vor der kinematischen Kette des Bewegungsautomaten vorgesehene Fasermaterial-Ausgleichseinrichtung auf, die zum Kompensieren einer Längenänderung wenigstens eines Faserführungsabschnittes ausgebildet ist, wenn die Faserlegeeinheit durch den mehrachsigen Bewegungsautomaten bewegt wird. Die Fasermaterial-Ausgleichseinrichtung ist insbesondere zum Kompensieren einer mit dem feststehenden Abstand der mindestens einen Umlenkeinheit zu dem jeweiligen Gelenk korrelierenden Längenänderung wenigstens eines Faserführungsabschnittes ausgebildet, so dass insbesondere bei einem kleinen Abstand zu dem Gelenk und einer damit resultierenden kleinen Längenänderung des Faserführungsabschnittes die Fasermaterial-Ausgleichseinrichtung auch nur diese kleine Längenänderung auszugleichen hat. Der Fasermaterial-Vorratsspeicher ist dabei ebenfalls in Faserzuführrichtung vor der kinematischen Kette des Bewegungsautomaten, insbesondere gegenüber den Bewegungsautomaten, feststehend angeordnet.

Die Fasermaterial-Ausgleichseinrichtung ist somit so ausgebildet, dass sie eine mit dem feststehenden Abstand der mindestens einen Umlenkeinheit zu dem jeweiligen Gelenk korrelierender maximaler Längenänderung der entsprechenden Faserführungsabschnitte ausgleichen kann. Je kleiner der Abstand dabei zum dem entsprechenden Gelenk der kinematischen Kette des Bewegungsautomaten ist, desto kompakter kann die Fasermaterial-Ausgleichseinrichtung aufgebaut sein, da entsprechende Längenänderungen ebenfalls kleiner ausfallen.

Die Erfinder haben dabei erkannt, dass die Umlenkeinheit nicht direkt in der Drehachse der Gelenke angeordnet sein muss, wenn das Faserendlosmaterial entlang der kinematischen Kette des Bewegungsautomaten geführt wird, sondern dass es ausreichend ist, wenn die Umlenkeinheit, bzw. die Umlenkeinheiten in einem feststehenden Abstand zu einem jeweils den Umlenkeinheiten zugeordneten Gelenk der kinematischen Kette angeordnet sind, da durch den feststehenden Abstand die maximal auftretende Längenänderung bei der Bewegung des Bewegungsautomaten korreliert und somit im Vorhinein ermittelbar ist, so dass mit Hilfe einer Fasermaterial-Ausgleichseinrichtung diese bekannte maximale Längenänderung beim Transport bzw. beim Zuführen des Faserendlosmaterials kompensiert werden kann. Das System arbeitet somit in vorher berechneten Systemgrenzen, was die Prozesssicherheit wesentlich erhöht.

Unter einem Bewegungsautomaten im Sinne der vorliegenden Erfindung wird insbesondere ein Knickarmroboter verstanden, dessen einzelne Glieder über Drehgelenke zu einer kinematischen Kette miteinander verbunden sind. Hierdurch wird die als Endeffektor vorgesehene Faserlegeeinheit in mindestens zwei Raumrichtungen im Raum bewegbar, vorzugsweise in alle drei Raumrichtungen.

Unter einem feststehenden Abstand der Umlenkeinheiten in Bezug auf ein Gelenk der kinematischen Kette wird insbesondere verstanden, dass die Umlenkeinheit an dem Bewegungsautomaten so angeordnet ist, dass bei jedweder Bewegung des Bewegungsautomaten die Umlenkeinheit immer einen feststehenden Abstand zu dem jeweils in Bezug genommenen Gelenk hat. Hierdurch kann sichergestellt werden, dass durch den immer gleich bleibenden Abstand der Umlenkeinheit zu dem jeweiligen Gelenk der maximale Längenausgleich bekannt ist, wobei darüber hinaus ein möglichst geringer Abstand zu dem jeweiligen Gelenk zu einer deutlich geringeren Längenänderung beim Bewegen des Bewegungsautomaten führt. Vorzugsweise wird das am nächstliegendste Gelenk in Bezug genommen. Besonders bevorzugt wird das in der kinematischen Kette nächstfolgende oder nächstzurückliegende Gelenk in Bezug genommen.

Die Umlenkeinheiten können beispielsweise drehbar gelagerte Umlenkrollen aufweisen, mit denen das Fasermaterial entlang der kinematischen Kette des Bewegungsautomaten geführt werden soll.

Gemäß einer vorteilhaften Ausführungsform ist die Fasermaterial-Ausgleichseinrichtung in dem Fasermaterial-Vorratsspeicher angeordnet, so dass der Fasermaterial-Vorratsspeicher und die Fasermaterial-Ausgleichseinrichtung eine bauliche Einheit bilden. Entstehende Zugkräfte und/oder Materialüberschüsse können dabei bereits in dem Fasermaterial-Vorratsspeicher kompensiert werden, wobei die Kompensation somit vor dem Beginn der kinematischen Kette des Bewegungsautomaten durchgeführt wird.

Hierzu ist es vorteilhat, wenn die Fasermaterial-Ausgleichseinrichtung mindestens eine Spannvorrichtung hat, die zum Spannen des Faserendlosmaterials bei einer Längenverkürzung und/oder Längenvergrößerung eines Faserführungsabschnittes ausgebildet ist. Eine solche Spannvorrichtung kann beispielsweise ein Tänzersystem sein, bei dem das Faserendlosmaterial durch eine zwischen zwei Rollen angeordnete Gewichtskraft gespannt wird.

Gemäß einer vorteilhaften Ausführungsform ist des Weiteren vorgesehen, dass die Faserführungseinrichtung in wenigstens einem Faserführungsabschnitt eine Faserführung hat, die eine feststehende Faserführungslänge aufweist, um eine Längenänderung des Faserführungsabschnittes durch die Faserführung selbst zu kompensieren. Hierdurch wird es möglich, dass ein Längenausgleich in einem Teilbereich der kinematischen Kette bewirkt wird, so dass durch die Fasermaterial-Ausgleichseinrichtung nur die Längenänderung derjenigen Faserführungsabschnitte kompensiert werden müssen, die keine feststehende Faserführungslänge aufweisen.

Eine solche feststehende Faserführungslänge kann beispielsweise mit einer Faserführung erfolgen, die flexible Röhren aufweist, in deren inneren Durchgang die Fasern geführt werden, wobei die flexiblen Röhren an ihren Anfangs- und Endpunkten jeweils fixiert sind. Eine derartige Faserführung weist unabhängig von der Bewegung des Bewegungsautomaten eine feststehende Faserführungslänge auf, so dass sich der Weg des Faserendlosmaterials während des Transportes entlang der Faserführung nicht ändert.

Eine andere Möglichkeit einer feststehenden Faserführungslänge ist eine Faserführung, bei der eine Mehrzahl von gelenkig miteinander verbundenen Verbindungselementen vorgesehen ist, wobei an den Gelenken jeweils Führungselemente zum Führen des Faserendlosmaterials entlang der Verbindungselemente vorgesehen ist. Eine derartige Faserführung kann beispielsweise eine Stabkinematik mit kugelgelagerten Rollen an den Gelenken sein, worüber die Fasern des Faserendlosmaterials geführt werden. Werden mehrere Faserstränge zu der Faserlegeeinheit geführt, so hat jeder Faserstrang ein separates Führungselement, so dass die Faserstränge getrennt voneinander befördert werden können.

Gemäß einer vorteilhaften Ausführungsform weist die kinematische Kette des Bewegungsautomaten ein erstes Hauptdrehgelenk, in der kinematischen Kette folgend ein zweites und drittes Hauptgelenk, und in der kinematischen Kette weiterfolgend mindestens zwei Kopfachsen zur Bewegung der Faserlegeeinheit auf. Die Faserführungseinrichtung weist darüber hinaus eine erste Umlenkeinheit, eine zweite Umlenkeinheit und eine dritte Umlenkeinheit auf. Die erste Umlenkeinheit ist in Bezug auf die Drehachse des ersten Hauptdrehgelenkes in einem festen Abstand an dem Bewegungsautomaten angeordnet, so dass zwischen dem Fasermaterial-Vorratsspeicher und der ersten Umlenkeinheit ein erster Faserführungsabschnitt gebildet wird. Diese erste Umlenkeinheit kann beispielsweise eine Mehrzahl von Umlenkrollen aufweisen, die jeweils in Bezug auf die Drehachse des ersten Hauptdrehgelenkes in einem festen Abstand, der von Umlenkrolle zu Umlenkrolle verschieden sein kann, angeordnet ist.

Die zweite Umlenkeinheit ist in Bezug auf die Drehachse des zweiten Hauptgelenkes in einem festen Abstand an dem Bewegungsautomaten angeordnet, so dass zwischen der ersten Umlenkeinheit und der zweiten Umlenkeinheit ein zweiter Faserführungsabschnitt gebildet wird. Auch hier kann die zweite Umlenkeinheit mehrere Umlenkrollen aufweisen, mit deren mehrere Faserendlosmaterialien parallel geführt werden können, wobei jede Faserführungsrolle in einem feststehenden Abstand zu der Drehachse des zweiten Hauptgelenkes angeordnet ist.

Schließlich ist die dritte Umlenkeinheit in Bezug auf die Drehachse des dritten Hauptgelenkes in einem festen Abstand an dem Bewegungsautomaten angeordnet, so dass zwischen der zweiten Umlenkeinheit und der dritten Umlenkeinheit ein dritter Faserführungsabschnitt und zwischen der dritten Umlenkeinheit und der Faserlegeeinheit ein vierter Faserführungsabschnitt gebildet wird.

Bei dieser Ausführungsform wird das Fasermaterial entlang der kinematischen Kette des Bewegungsautomaten geführt, wobei das Führen des Faserendlosmaterials in einem gewissen Abstand zu dem jeweiligen in Bezug genommenen Gelenken erfolgt, wodurch sich eine vordefinierte maximale Längenänderung beim Bewegen des Bewegungsautomaten ergibt. Diese wird dann durch die vor der kinematischen Kette des Bewegungsautomaten angeordnete Fasermaterial-Ausgleichseinrichtung kompensiert.

Vorteilhafterweise ist die Faserführungseinrichtung so ausgebildet, dass der vierte Faserführungsabschnitt zum Überbrücken der Kopfachsen des Bewegungsautomaten eingerichtet ist, insbesondere zur Kompensation der Bewegungen in allen drei Raumrichtungen. Dies kann, wie bereits oben beschrieben, mit Hilfe von flexiblen Röhren oder ähnlichem erfolgen.

Es ist daher besonders vorteilhaft, wenn die Faserführungseinrichtung im vierten Faserführungsabschnitt eine Faserführung zur Kompensierung einer Längenänderung zwischen der dritten Umlenkeinheit und der Faserlegeeinheit hat, die eine oder mehrere flexible Röhren aufweist, in deren inneren Durchgang das Faserendlosmaterial zur Faserlegeeinheit geführt wird. Somit lassen sich mit Hilfe von flexiblen Röhren nicht nur Längenänderungen des vierten Faserführungsabschnittes kompensieren, sondern auch gleichzeitig jegliche Bewegungen zwischen der dritten Umlenkeinheit und dem Faserlegekopf in alle drei Raumrichtungen ausgleichen.

Gemäß einer weiteren vorteilhaften Ausführungsform weist die erste Umlenkeinheit eine oder mehrere Umlenkelemente auf, die zum Führen des Faserendlosmaterials radial zu der Drehachse des ersten Hauptdrehgelenkes der kinematischen Kette ausgebildet ist. Dadurch werden die Faserendlosmaterialien am ersten Umlenkelement parallel geführt, so dass Torsionsbewegungen des Fasermaterials beim Zuführen eliminiert werden.

Demnach ist es ebenfalls vorteilhaft, wenn die zweite und dritte Umlenkeinheit jeweils eine oder mehrere Umlenkelemente haben, die zum Führen des Faserendlosmaterials radial zu den Drehachsen des zweiten und dritten Hauptgelenkes der kinematischen Kette ausgebildet sind. Gemäß einer weiteren vorteilhaften Ausführungsform ist die Fasermaterial-Ausgleichseinrichtung so ausgebildet, dass die mit den feststehenden Abständen der ersten, zweiten und dritten Umlenkeinheit zu ihren jeweiligen Gelenken korrelierenden Längenänderung des ersten, zweiten und dritten Faserführungsabschnittes kompensiert werden können, wenn die Faserlegeeinheit durch die Mehrachsen im Bewegungsautomaten bewegt wird. Vorteilhafterweise ist hierbei der vierte Faserführungsabschnitt mit einer Faserführung so ausgebildet, dass Längenänderungen durch die Faserführung direkt kompensiert werden.

Die Erfindung wird anhand der beigefügten Figuren beispielhaft erläutert:
Es zeigen:
- Figur 1: - Schematische Darstellung eines Industrieroboters mit sechs Bewegungsachsen;
- Figur 2: - schematische Darstellung des erfindungsgemäßen Faserführungssystems.

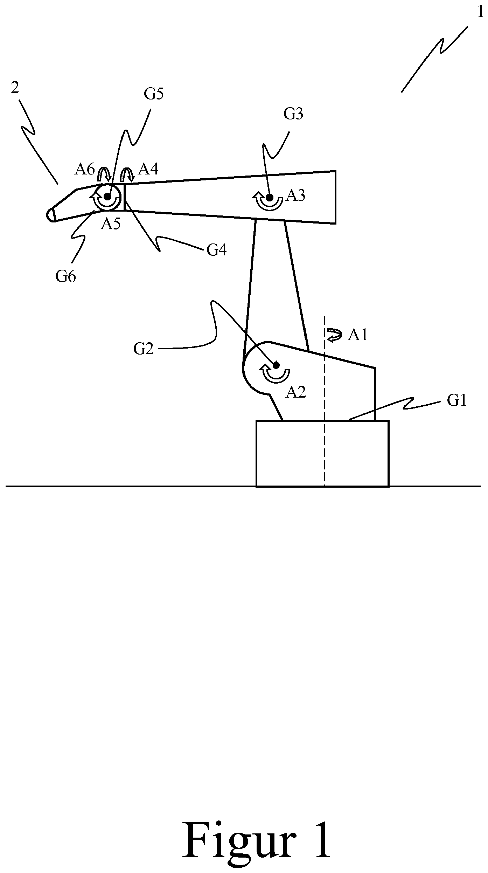

Figur 1 zeigt schematisch einen im industriellen Umfeld häufig anzutreffenden Sechs-Achsen-Knickarmroboter, der über sechs Drehachsen verfügt und somit jeden beliebigen Punkt im Raum erreichen kann. Ein derartiger Sechs-Achsen-Knickarmroboter wird in der Praxis häufig auch als Legeroboter zum Legen von Fasermaterial verwendet, da er eine hohe Flexibilität aufweist.

Der Knickarmroboter 1 weist drei Hauptachsen A1, A2 und A3 auf mit denen der Faserlegekopf 2 bzw. die Faserlegeeinheit frei im Raum positioniert werden kann. Die drei Hauptachsen A1, A2 und A3 korrespondieren dabei mit jeweils an dem Knickarmroboter 1 vorgesehenen Gelenken G1, G2 und G3, um die das jeweilige Glied der kinematischen Kette gedreht werden kann.

Mittels der vertikal vorliegenden Hauptdrehachse A1 lässt sich der gesamte Knickarmroboter um die Hauptdrehachse A1 drehen. Mit Hilfe der in der kinematischen Kette nachfolgend angeordneten Hauptachsen A2 und A3, die als Drehachsen horizontal (und somit gegeneinander parallel) vorliegen, können translatorische Bewegungen des Endeffektors 2 durchgeführt werden. Durch die Gelenke G2 und G3 mit ihren Hauptachsen A2 und A3 wird dabei ein wattsches Parallelogramm gebildet, so dass durch Drehbewegungen um die Drehachsen A2 und A3 die Faserlegeeinheit eine lineare bzw. translatorische Bewegung ausführen kann.

Die Kopfachsen A4, A5 und A6 mit ihren jeweiligen Gelenken G4, G5 und G6 dienen in erster Linie für die Orientierung des Faserlegekopfes 2 und bestehen ebenfalls aus Drehgelenken. Die Achsen A4, A5 sowie A6 stehen dabei senkrecht zueinander.

Soll von einem feststehenden Fasermaterial-Vorratsspeicher Faserendlosmaterial zu dem Endeffektor 2 geführt werden, so muss aufgrund der Bewegung des Roboters 1 ein Längenausgleich zwischen dem feststehenden Fasermaterial-Vorratsspeicher und dem Faserlegekopf 2 durchgeführt werden.

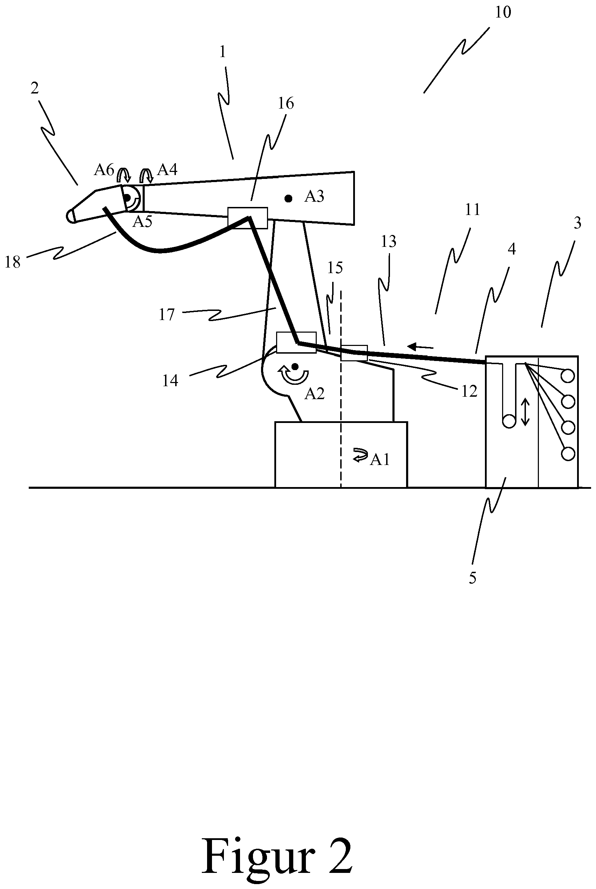

Figur 2 zeige schematisch die erfindungsgemäße Faserlegevorrichtung 10. Die Faserlegevorrichtung 10 weist einen Knickarmroboter 1 auf, wie er beispielsweise in Figur 1 beschrieben ist. Als Endeffektor an dem Knickarmroboter 1 ist ein Faserlegekopf 2 angeordnet. Die Faserlegevorrichtung 10 weist des Weiteren einen Fasermaterial-Vorratsspeicher 3 auf, in dem Faserendlosmaterial 4 aufbewahrt und gespeichert wird. Das Faserendlosmaterial 4 wird dann von dem Fasermaterial-Vorratsspeicher 3 bis zu dem am Roboter 1 angeordneten Faserlegekopf 2 transportiert, so dass der Faserlegekopf 2 das Fasermaterial 4 beispielsweise auf einem nicht dargestellten Formwerkzeug ablegen kann.

Der Fasermaterial-Vorratsspeicher 3 kann beispielsweise das Fasermaterial 4 auf Spulen oder Rollen aufgewickelt bereitstellen und gegebenenfalls im Innenraum temperierbar sein, um so die notwendigen Prozessparameter optimal einstellen zu können. Des Weiteren kann der Fasermaterial-Vorratsspeicher 3 eine Vielzahl von Faserendlosmaterialien 4, beispielsweise in Form von auf Rollen aufgewickelten Fasersträngen oder Bändern aufweisen, die dann einzeln, jedoch parallel zu dem Faserlegekopf 2 geführt werden. Der Faserlegekopf 2 kann dann die einzelnen Faserendlosmaterialien, beispielsweise in Form von Faserbändern, simultan auf dem Formwerkzeug ablegen. Somit können beispielsweise bis zu 16 Endlosfasermaterialien, wie beispielsweise Faserbänder, gleichzeitig und parallel zu dem Faserlegekopf transportiert werden.

des Weiteren weist die Faserlegevorrichtung 10 eine Faserführungseinrichtung 11 auf, mit der die Fasern bzw. das Fasermaterial 4 von dem Fasermaterial-Vorratsspeicher 3 entlang der kinematischen Kette der Roboters 1 zu dem Faserlegekopf 2 transportiert bzw. diesem zugeführt werden sollen.

Die Faserführungseinrichtung 11 weist im Ausführungsbeispiel der Figur 2 hierfür eine erste Umlenkeinheit 12 auf, die in einem feststehenden Abstand zu der Hauptdrehachse A1 des Hauptdrehgelenkes G1 angeordnet ist. Hierdurch wird das Faserendlosmaterial 4 zunächst in die Bewegung der kinematischen Kette des Roboters 1 eingeschleust. Zwischen der ersten Umlenkeinheit 12 und dem Fasermaterial-Vorratsspeicher 3 wird somit ein erster Faserführungsabschnitt 13 gebildet, der aufgrund des bestehenden Abstandes der Umlenkeinheit 12 zu der Hauptdrehachse A1 beim Bewegen des Roboters 1 seine Länge ändern kann.

Die erste Umlenkeinheit 12 kann beispielsweise eine Mehrzahl von Umlenkelementen, wie beispielsweise Umlenkrollen, aufweisen, die alle unterschiedliche Abstände zu der Hauptdrehachse A1 aufweisen können. So ist es beispielsweise denkbar, dass wenigstens eine Umlenkrolle bzw. ein Umlenkelement direkt in der Hauptdrehachse A1 angeordnet ist, während die übrigen Elemente mit einem jeweiligen Abstand zu der Hauptdrehachse A1 vorgesehen sind. In Summe ergibt sich dadurch ein entsprechender Abstand der ersten Umlenkeinheit 12 in Bezug auf die Hauptdrehachse A1.

Des Weiteren weist die Faserführungseinrichtung 11 eine zweite Umlenkeinheit 14 an dem Roboter 1 auf, die in Bezug auf die zweite Drehachse A2 mit einem festen Abstand angeordnet ist. Das Fasermaterial 4 wird nun von der ersten Umlenkeinheit weiter zu der zweiten Umlenkeinheit geführt, wobei zwischen der ersten Umlenkeinheit und der zweiten Umlenkeinheit ein zweiter Faserführungsabschnitt 15 gebildet wird.

In der kinematischen Kette folgend ist hinter der dritten Drehachse A3 eine dritte Umlenkeinheit 16 angeordnet, so dass die von der zweiten Umlenkeinheit 14 zu der dritten Umlenkeinheit 16 transportierten Fasern in einem dazwischen gebildeten dritten Faserführungsabschnitt 17 geführt werden. Die dritte Umlenkeinheit 16 ist dabei in einem festen Abstand zu der Drehachse A3 angeordnet.

Alle drei Faserführungsabschnitte 13, 15 und 17 können beispielsweise so ausgebildet sein, dass das Fasermaterial offen entlang der kinematischen Kette des Roboters geführt wird. Darüber hinaus wird jeder Faserführungsabschnitt bei entsprechenden Bewegungen des Roboters 1 aufgrund der Abstände zu seinen jeweils in Bezug genommenen Gelenken bzw. Drehachsen seine Länge mehr oder weniger stark ändern, so dass hierdurch Materialüberschuss (lose) bzw. Zugkräfte bei zu wenig Material an dem Faserendlosmaterial 4 entstehen kann.

Hierzu ist im Ausführungsbeispiel der Figur 2 in dem Fasermaterial-Vorratsspeicher 3 eine Fasermaterial-Ausgleichseinrichtung 5 vorgesehen, die zum Kompensieren einer Längenänderung eines der Faserführungsabschnitte ausgebildet ist. Eine derartige Kompensation kann beispielsweise mit Hilfe eines Tänzersystems erfolgen, bei dem das Fasermaterial schlaufenartig durch eine Spannrolle geführt wird, die die auftretende Längenänderung in einem oder mehreren Faserführungsabschnitten durch eine entsprechende Längenänderung der Schlaufenführung in der Vertikalen ausgleicht.

Die Fasermaterial-Ausgleichseinrichtung 5 ist dabei in Faserzuführrichtung vor der kinematischen Kette des Roboters 1 angeordnet, so dass eine entsprechende Längenänderung an jedem der Faserführungsabschnitte kompensiert werden kann.

Im Ausführungsbeispiel der Figur 2 ist des Weiteren ausgehend von der dritten Umlenkeinheit 16 ein vierter Faserführungsabschnitt 18 gebildet, deren Endpunkt der Faserlegekopf 2 ist. Da ausgehend von der dritten Umlenkeinheit 16 zum Faserlegekopf 3 Kopfachsen A4, A5 und A6 überbrückt werden, ist es besonders vorteilhaft, wenn der vierte Faserführungsabschnitt eine Faserführung aufweist, die eine Längenänderung des vierten Faserführungsabschnittes 18 direkt kompensiert. Dies kann beispielsweise mit Hilfe von flexiblen Röhren geschehen, die fest mit der dritten Umlenkeinheit 16 und dem Faserlegekopf 2 fixiert und somit eine über den Transportweg gleichbleibende Länge aufweisen. Eine Längenänderung des vierten Faserführungsabschnittes 18 wird dabei durch die Verformung bzw. Formänderung der Faserführung bei gleichbleibender Transportlänge kompensiert.

### Bezugszeichen

- 1: - Roboter
- 2: - Faserlegekopf
- 3: - Fasermaterial-Vorratsspeicher
- 4: - Faserendlosmaterial
- 5: - Fasermaterial-Ausgleichseinrichtung
- 10: - Faserlegevorrichtung
- 11: - Faserführungseinrichtung
- 12: - erste Umlenkeinheit
- 13: - erster Faserführungsabschnitt
- 14: - zweite Umlenkeinheit
- 15: - zweiter Faserführungsabschnitt
- 16: - dritte Umlenkeinheit
- 17: - dritter Faserführungsabschnitt
- 18: - vierter Faserführungsabschnitt

## Patentansprüche

1. Faserlegevorrichtung (10) zum Legen von Faserendlosmaterial (4) zur Herstellung eines Faserverbundbauteils mit einem mehrachsigen Bewegungsautomaten (1), der am Ende seiner kinematischen Kette eine Faserlegeeinheit (2) zum Legen des Faserendlosmaterials (4) hat, wobei die kinematische Kette des Bewegungsautomaten (1) mehrere Gelenke (A1-A6) umfasst, um die Faserlegeeinheit (2) im Raum zu bewegen, mit einem Fasermaterial-Vorratsspeicher (3) zum Bereitstellen des abzulegenden Faserendlosmaterials (4), und mit einer Faserführungseinrichtung (11) zum Zuführen des Faserendlosmaterials (4) von dem Fasermaterial-Vorratsspeicher (3) zu der von dem Fasermaterial-Vorratsspeicher (3) entfernten und im Raum bewegbaren Faserlegeeinheit (2), wobei die Faserführungseinrichtung (11) mindestens eine Umlenkeinheit (12, 14, 16) hat, die an dem Bewegungsautomaten (1) in Bezug auf ein Gelenk (A1, A2, A3) der kinematischen Kette des Bewegungsautomaten (1) in einem feststehenden Abstand angeordnet ist, sodass zwischen dem Fasermaterial-Vorratsspeicher (3) und der Faserlegeeinheit (2) wenigstens zwei Faserführungsabschnitte (13, 15, 17, 18) gebildet werden, wobei die Faserlegevorrichtung (1) eine in Faserzuführrichtung vor der kinematischen Kette des Bewegungsautomaten vorgesehene Fasermaterial-Ausgleichseinrichtung (5) hat, die zum Kompensieren einer mit dem feststehenden Abstand der mindestens einen Umlenkeinheit (12, 14, 16) zu dem jeweiligen Gelenk (A1, A2, A3) korrelierenden Längenänderung wenigstens eines Faserführungsabschnittes (13, 15, 17) ausgebildet ist, wenn die Faserlegeeinheit (2) durch den mehrachsigen Bewegungsautomaten (1) bewegt wird, **dadurch gekennzeichnet, dass** die kinematische Kette des Bewegungsautomaten (1) ein erstes Hauptdrehgelenk (A1) mit einer vertikal vorliegenden Hauptdrehachse, in der kinematischen Kette folgend ein zweites und drittes Hauptgelenke (A2, A3) und in der kinematischen Kette folgend mindestens zwei Kopfachsen (A4, A5, A6) zur Bewegung der Faserlegeeinheit (2) umfasst, wobei die Faserführungseinrichtung (11)
a) eine erste Umlenkeinheit (12) hat, die in Bezug auf die Drehachse des ersten Hauptdrehgelenkes (A1) in einem festen Abstand an dem Bewegungsautomaten (1) angeordnet ist, sodass zwischen dem Fasermaterial-Vorratsspeicher (3) und der ersten Umlenkeinheit (12) ein erster Faserführungsabschnitt (13) gebildet wird,
b) eine zweite Umlenkeinheit (14) hat, die in Bezug auf die Drehachse des zweiten Hauptgelenkes (A2) in einem festen Abstand an dem Bewegungsautomaten (1) angeordnet ist, sodass zwischen der ersten Umlenkeinheit (12) und der zweiten Umlenkeinheit (14) ein zweiter Faserführungsabschnitt (15) gebildet wird, und
c) eine dritte Umlenkeinheit (16) hat, die in Bezug auf die Drehachse des dritten Hauptgelenkes (A3) in einem festen Abstand an dem Bewegungsautomaten (1) angeordnet ist, sodass zwischen der zweiten Umlenkeinheit (12) und der dritten Umlenkeinheit (14) ein dritter Faserführungsabschnitt (17) und zwischen der dritten Umlenkeinheit (14) und der Faserlegeeinheit (2) ein vierter Faserführungsabschnitt (18) gebildet wird.

2. Faserlegevorrichtung (10) nach Anspruch 1, **dadurch gekennzeichnet, dass** die Fasermaterial-Ausgleichseinrichtung (5) in dem Fasermaterial-Vorratsspeicher (3) angeordnet ist.

3. Faserlegevorrichtung (10) nach Anspruch 1 oder 2, **dadurch gekennzeichnet, dass** die Fasermaterial-Ausgleichseinrichtung (5) mindestens eine Spannvorrichtung hat, die zum Spannen des Faserendlosmaterials bei einer Längenverkürzung und/oder Längenvergrößerung eines Faserführungsabschnittes ausgebildet ist.

4. Faserlegevorrichtung (10) nach einem der vorhergehenden Ansprüche, **dadurch gekennzeichnet, dass** die Faserführungseinrichtung (11) in wenigstens einem Faserführungsabschnitt (18) eine Faserführung hat, die eine feststehende Faserführungslänge aufweist, um eine Längenänderung des Faserführungsabschnitts (18) durch die Faserführung selbst zu kompensieren.

5. Faserlegevorrichtung (10) nach einem der vorhergehenden Ansprüche, **dadurch gekennzeichnet, dass** der vierte Faserführungsabschnitt (18) zum Überbrücken der Kopfachsen (A4, A5, A6) des Bewegungsautomaten (1) ausgebildet ist.

6. Faserlegevorrichtung (10) nach einem der vorhergehenden Ansprüche, **dadurch gekennzeichnet, dass** die Faserführungseinrichtung (11) im vierten Faserführungsabschnitt (18) eine Faserführung zur Kompensation einer Längenänderung zwischen der dritten Umlenkeinheit (16) und der Faserlegeeinheit (2) hat, die eine oder mehrere flexible Röhren aufweist, in deren inneren Durchgang das Faserendlosmaterial zur Faserlegeeinheit geführt wird.

7. Faserlegevorrichtung (10) nach einem der vorhergehenden Ansprüche, **dadurch gekennzeichnet, dass** die erste Umlenkeinheit (12) eine oder mehrere Umlenkelemente hat, die zum Führen des Faserendlosmaterials radial zu der Drehachse des ersten Hauptdrehgelenkes der kinematischen Kette ausgebildet ist.

8. Faserlegevorrichtung (10) nach einem der vorhergehenden Ansprüche, **dadurch gekennzeichnet, dass** die zweite und dritte Umlenkeinheit (14, 16) jeweils eine oder mehrere Umlenkelemente haben, die zum Führen des Faserendlosmaterials radial zu den Drehachsen des zweiten und dritten Hauptgelenkes der kinematischen Kette ausgebildet ist.

9. Faserlegevorrichtung (10) nach einem der vorhergehenden Ansprüche, **dadurch gekennzeichnet, dass** die Fasermaterial-Ausgleichseinrichtung (5) ausgebildet ist, die mit den feststehenden Abständen der ersten, zweiten und dritten Umlenkeinheit zu ihren jeweiligen Gelenken korrelierende Längenänderung des ersten, zweiten und dritten Faserführungsabschnittes zu kompensieren, wenn die Faserlegeeinheit durch den mehrachsigen Bewegungsautomaten bewegt wird.

## Claims

1. Fiber-laying device (10) for laying continuous fiber material (4) for manufacturing a fiber-composite component using a multiaxial automaton (1) which at the end of its kinematic chain has a fiber-laying unit (2) for laying the continuous fiber material (4), wherein the kinematic chain of the automaton (1) comprises a plurality of joints (A1-A6) in order for the processing unit (2) to be moved in space, having a fiber-material storage unit (3) for providing the continuous fiber material (4) to be laid, and having a fiber-guiding installation (11) for infeeding the continuous fiber material (4) from the fiber-material storage unit (3) to the fiber-laying unit (2) which is remote from the fiber-material storage (3) unit and is movable in space, whereby the fiber-guiding installation (11) has at least one deflection unit (12, 14, 16) which is disposed on the automaton (1) so as to be fixedly spaced apart from a joint (A1, A2, A3) of the kinematic chain of the automaton (1), such that at least two fiber-guiding portions (13, 15, 17, 18) are formed between the fiber-material storage unit (3) and the fiber-laying unit (2), wherein the fiber-laying device (1) has a fiber-material equalization installation (5) which in the fiber-infeed direction is provided ahead of the kinematic chain of the automaton and which is configured for compensating for a length variation of at least one fiber-guiding portion (13, 15, 17), which correlates to the fixed spacing of the at least one deflection unit (12, 14, 16) from the respective joint (A1, A2, A3), when the fiber-laying device (2) is moved through the multiaxial automaton (1), **characterized in that** that the kinematic chain of the automaton (1) comprises a first main rotary joint (A1) including a vertical main rotary axis, following in the kinematic chain a second and third main joint (A2, A3), and following in the kinematic chain at least two head axes (A4, A5, A6) for moving the fiber-laying unit (2), wherein the fiber-guiding installation (11) has
a) a first deflection unit (12) which is disposed on the automaton (1) so as to be fixedly spaced apart from the rotation axis of the first main rotary joint (A1), such that a first fiber-guiding portion (13) is formed between the fiber-material storage unit (3) and the first deflection unit (12),
b) a second deflection unit (14) which is disposed on the automaton (1) so as to be fixedly spaced apart from the rotation axis of the second main joint (A2), such that a second fiber-guiding portion (15) is formed between the first deflection unit (12) and the second deflection unit (14), and
c) a third deflection unit (16) which is disposed on the automaton (1) so as to be fixedly spaced apart from the rotation axis of the third main joint (A3), such that a third fiber-guiding portion (17) is formed between the second deflection unit (12) and the third deflection unit (14), and a fourth fiber-guiding portion (18) is formed between the third deflection unit (14) and the fiber-laying unit (2).

2. Fiber-laying device (10) according to Claim 1, **characterized in that** the fiber-material equalization installation (5) is disposed in the fiber-material storage unit (3).

3. Fiber-laying device (10) according to Claim 1 or 2, **characterized in that** the fiber-material equalization installation (5) has at least one tensioning device which is configured for tensioning the continuous fiber material in the event of a length reduction and/or length extension of a fiber-guiding portion.

4. Fiber-laying device (10) according to one of the preceding claims, **characterized in that** the fiber-guiding installation (11) in at least one fiber-guiding portion (18) has a fiber guide which has a fixed fiber-guiding length, in order for a length variation of the fiber-guiding portion (18) to be compensated for by the fiber-guide per se.

5. Fiber-laying device (10) according to one of the preceding claims, **characterized in that** the fourth fiber-guiding portion (18) is configured for bridging the head axes (A4, A5, A6) of the automaton (1).

6. Fiber-laying device (10) according to one of the preceding claims, **characterized in that** the fiber-guiding installation (11) in the fourth fiber-guiding portion (18) has a fiber guide for compensating for length variation between the third deflection unit (16) and the fiber-laying unit (2), which has one or a plurality of flexible pipes in the internal passage of which the continuous fiber material is guided to the fiber-laying unit.

7. Fiber-laying device (10) according to one of the preceding claims, **characterized in that** the first deflection unit (12) has one or a plurality of deflection elements which is/are configured for guiding the continuous fiber material in a radial manner to the rotation axis of the first main rotary joint of the kinematic chain.

8. Fiber-laying device (10) according to one of the preceding claims, **characterized in that** the second and third deflection unit (14, 16) in each case have one or more deflection elements which are configured for guiding the continuous fiber material in a radial manner to the rotation axes of the second and third main joint of the kinematic chain.

9. Fiber-laying device (10) according to one of the preceding claims, **characterized in that** the fiber-material equalization installation (5) is configured for compensating the length variation of the first, second, and third fiber-guiding portion, which correlates to the fixed spacings of the first, second, and third deflection unit from their respective joints, when the fiber-laying unit is moved through the multiaxial automaton.

## Revendications

1. Dispositif de pose de fibre (10) pour poser un matériau sans fin fibreux (4) pour fabriquer un composant composite renforcé par des fibres avec un automate mobile (1) à plusieurs axes qui présente, à l'extrémité de sa chaîne cinématique, une unité de pose de fibre (2) pour poser le matériau sans fin fibreux (4), la chaîne cinématique de l'automate mobile (1) comprenant plusieurs articulations (A1-A6) afin de déplacer l'unité de pose de fibre (2) dans l'espace, avec un dispositif de stockage de matériau fibreux (3) pour fournir le matériau sans fin fibreux à déposer (4), et avec un dispositif de guidage de fibres (11) pour acheminer le matériau sans fin fibreux (4) depuis le dispositif de stockage de matériau fibreux (3) jusqu'à l'unité de pose de fibres (2) éloignée du dispositif de stockage de matériau fibreux (3) et pouvant être déplacée dans l'espace, le dispositif de guidage de fibres (11) présentant au moins une unité de renvoi (12, 14, 16) qui est disposée au niveau de l'automate mobile (1) à une distance fixe par rapport à une articulation (A1, A2, A3) de la chaîne cinématique de l'automate mobile (1), de telle sorte qu'entre le dispositif de stockage de matériau fibreux (3) et l'unité de pose de fibres (2) soient formées au moins deux portions de guidage de fibres (13, 15, 17, 18), le dispositif de pose de fibre (1) présentant un dispositif d'équilibrage de matériau fibreux (5) prévu dans une direction d'acheminement de fibres avant la chaîne cinématique de l'automate mobile, qui est réalisé pour compenser une variation de longueur d'au moins une portion de guidage de fibres (13, 15, 17) corrélant la distance fixe de l'au moins une unité de renvoi (12, 14, 16) à l'articulation respective (A1, A2, A3), lorsque l'unité de pose de fibres (2) est déplacée à travers l'automate mobile (1) à plusieurs axes, **caractérisé en ce que** la chaîne cinématique de l'automate mobile (1) comprend une première articulation pivotante principale (A1) avec un axe de rotation principal orienté verticalement, ensuite, dans la chaîne cinématique, une deuxième et une troisième articulation principale (A2, A3) et ensuite, dans la chaîne cinématique, au moins deux axes de tête (A4, A5, A6) pour le déplacement de l'unité de pose de fibres (2), le dispositif de guidage de fibres (11) comprenant
a) une première unité de renvoi (12) qui est disposée, par rapport à l'axe de rotation de la première articulation pivotante principale (A1), à une distance fixe sur l'automate mobile (1), de telle sorte qu'entre le dispositif de stockage de matériau fibreux (3) et la première unité de renvoi (12) soit formée une première portion de guidage de fibres (13),
b) une deuxième unité de renvoi (14) qui est disposée, par rapport à l'axe de rotation de la deuxième articulation principale (A2), à une distance fixe sur l'automate mobile (1), de telle sorte qu'entre la première unité de renvoi (12) et la deuxième unité renvoi (14) soit formée une deuxième portion de guidage de fibres (15), et
c) une troisième unité de renvoi (16) qui est disposée, par rapport à l'axe de rotation de la troisième articulation principale (A3), à une distance fixe sur l'automate mobile (1), de telle sorte qu'entre la deuxième unité de renvoi (12) et la troisième unité de renvoi (14) soit formée une troisième portion de guidage de fibres (17) et qu'entre la troisième unité de renvoi (14) et l'unité de pose de fibres (2) soit formée une quatrième portion de guidage fibres (18).

2. Dispositif de pose de fibres (10) selon la revendication 1, **caractérisé en ce que** le dispositif d'équilibrage de matériau fibreux (5) est disposé dans le dispositif de stockage de matériau fibreux (3).

3. Dispositif de pose de fibres (10) selon la revendication 1 ou 2, **caractérisé en ce que** le dispositif d'équilibrage de matériau fibreux (5) présente au moins un dispositif de tensionnement qui est réalisé pour tendre le matériau sans fin fibreux dans le cas d'un raccourcissement de longueur et/ou d'une augmentation de longueur d'une portion de guidage de fibres.

4. Dispositif de pose de fibres (10) selon l'une quelconque des revendications précédentes, **caractérisé en ce que** le dispositif de guidage de fibres (11), dans au moins une portion de guidage de fibres (18), présente un guidage de fibres qui présente une longueur de guidage de fibres fixe afin de compenser les variations de longueur de la portion de guidage de fibres (18) par le guidage de fibres lui-même.

5. Dispositif de pose de fibres (10) selon l'une quelconque des revendications précédentes, **caractérisé en ce que** la quatrième portion de guidage de fibres (18) est réalisée pour surmonter les axes de tête (A4, A5, A6) de l'automate mobile (1).

6. Dispositif de pose de fibres (10) selon l'une quelconque des revendications précédentes, **caractérisé en ce que** le dispositif de guidage de fibres (11) présente, dans la quatrième portion de guidage de fibres (18), un guidage de fibres pour la compensation d'une variation de longueur entre la troisième unité de renvoi (16) et l'unité de pose de fibres (2), qui présente un ou plusieurs tubes flexibles dans le passage intérieur desquels le matériau sans fin fibreux est guidé vers l'unité de pose de fibres.

7. Dispositif de pose de fibres (10) selon l'une quelconque des revendications précédentes, **caractérisé en ce que** la première unité de renvoi (12) présente un ou plusieurs éléments de renvoi qui sont réalisés pour guider le matériau sans fin fibreux radialement vers l'axe de rotation de la première articulation pivotante principale de la chaîne cinématique.

8. Dispositif de pose de fibres (10) selon l'une quelconque des revendications précédentes, **caractérisé en ce que** la deuxième et la troisième unité de renvoi (14, 16) présentent chacune un ou plusieurs éléments de renvoi qui sont réalisés pour guider le matériau sans fin fibreux radialement vers les axes de rotation de la deuxième et de la troisième articulation principale de la chaîne cinématique.

9. Dispositif de pose de fibres (10) selon l'une quelconque des revendications précédentes, **caractérisé en ce que** le dispositif d'équilibrage de matériau fibreux (5) est réalisé de manière à compenser les variations de longueur de la première, deuxième et troisième portion de guidage de fibres corrélant les distances fixes de la première, deuxième et troisième unité de renvoi avec leurs articulations respectives, lorsque l'unité de pose de fibres est déplacée par l'automate mobile à plusieurs axes.
